Europäisches Patentamt

(19) European Patent Office

Office européen des brevets

(11) Publication number: **0 007 651**
**B1**

(12) **EUROPEAN PATENT SPECIFICATION**

(45) Date of publication of patent specification: **20.07.83**

(51) Int. Cl.³: **F 16 L 13/11, F 16 L 39/00, F 16 L 59/14**

(21) Application number: **79200309.7**

(22) Date of filing: **13.06.79**

(54) **Pipe connection.**

(30) Priority: **13.06.78 NL 7806422**

(43) Date of publication of application:
**06.02.80 Bulletin 80/3**

(45) Publication of the grant of the patent:
**20.07.83 Bulletin 83/29**

(84) Designated Contracting States:
**BE DE FR GB NL SE**

(56) References cited:
**CH - A - 418 068**
**DE - A - 2 015 341**
**DE - A - 2 305 348**
**GB - A - 256 525**
**GB - A - 1 488 395**
**US - A - 3 402 731**
**US - A - 3 912 286**
**US - A - 3 989 281**

(73) Proprietor: **Ketech B.V.**
**21 Schelmaatstraat**
**NL-7575 BC Oldenzaal (NL)**

(72) Inventor: **Ketel, Jacob Hermen**
**Aak 1**
**NL-9606 PX Kropswolde (NL)**

(74) Representative: **Schumann, Bernard Herman Johan et al,**
**OCTROOIBUREAU ARNOLD & SIEDSMA**
**Sweelinckplein 1**
**NL-2517 GK The Hague (NL)**

Courier Press, Leamington Spa, England

Pipe connection

The invention relates to a pipe connection according to the preamble of claim 1. Such a pipe connection is known from DE—A—20 15 341.

The invention has for its purpose to provide a pipe connection which is excellently suited for adiabatically or insulatingly transporting fluids having a substantial temperature difference with the environment.

A further purpose of the invention is to provide a pipe connection which is adapted to connect two pipe sections at any position desired and which can be very easily made by relatively unskilled personnel while using some simple tools.

Another purpose of the invention is to provide a pipe connection which ensures the relatively small additional temperature losses in the case of a pipe line consisting of a large number of pipe sections, one of which exhibits an imperfect sealing, e.g. a small damagement, causing environmental, thermally conductive fluids, e.g. soil water to penetrate and to seriously and adversely affect the adiabatic properties of the pipe line as a whole.

It is further an object of the invention to ensure an accurate coaxial and axial positioning and to provide a fixed or predetermined inserting depth.

The above-mentioned object and purposes are realized in a pipe connection set forth in the first paragraph by the features as described in the characterizing part of claim 1. This pipe connection according to the invention can be made by sawing off the insulated pipe section to the suitable length, inserting the connector section to the suitable length, inserting the connector section, and slipping the next pipe section onto the other extremity of the connector section. The hollow cylindrical spaces remaining between the tube and the connector section and between the insulation and insulation cover are subsequently filled by casting a thermosetting two-component synthetic resin for sealing and covering, the synthetic resin additionally providing the mechanical strength of the pipe connection. During casting the seam formed by connecting the pipe sections is covered by a clamp or a clip or the like, such that the resin is prevented from flowing downward from said seam.

In this way an insulated pipe joint is obtained which does not need any special final treatment after sawing the pipe section to the desired length at any position and wherein after applying the connector section in one operation both mechanical jointing as well as sealing of the insulating is obtained. When assembling the joint no losses of pipe length due to construction lengths have to be taken into consideration. The assembled joint does not require any additional final treatment.

It should be noted that in a pipe line comprising a plurality of pipe connections according to the present invention the insulating coating of the respective pipe sections are fully separated from one another. As a result thereof, if e.g. soil water has penetrated in the insulated coating of one section, through an incomplete sealing due to e.g. damagement or the like, the water penetration will be restricted to that one section, such that no substantial and serious deterioration of the insulating properties of the pipe line as a whole will occur.

It is further remarked that according to the invention the thermosetting synthetic resin is also operative to ensure the thermal insulation in the area of the joint as well as, as mentioned before, the mechanical connection.

It may be advantageous to be able to cure the thermosetting synthetic resin also at lower environmental temperature within an acceptable period of time. To that purpose the male end may be provided with a at least one winding of resistance wire, the ends of which are guided through between the pipe sections to the outside. After casting the synthetic resin a suitable electric power source is connected with these ends thereby heating the resistance wire and the synthetic resin and accordingly shortening the setting time.

Further details and features of the invention will be mentioned and explained with reference to the drawing in which:

Fig. 1 shows an axial section through a preferred embodiment of a pipe connection made in accordance with the invention,

Fig. 2 shows an axial section through a modified embodiment thereof and

Fig. 3 shows a transverse section along the line III—III in fig. 1.

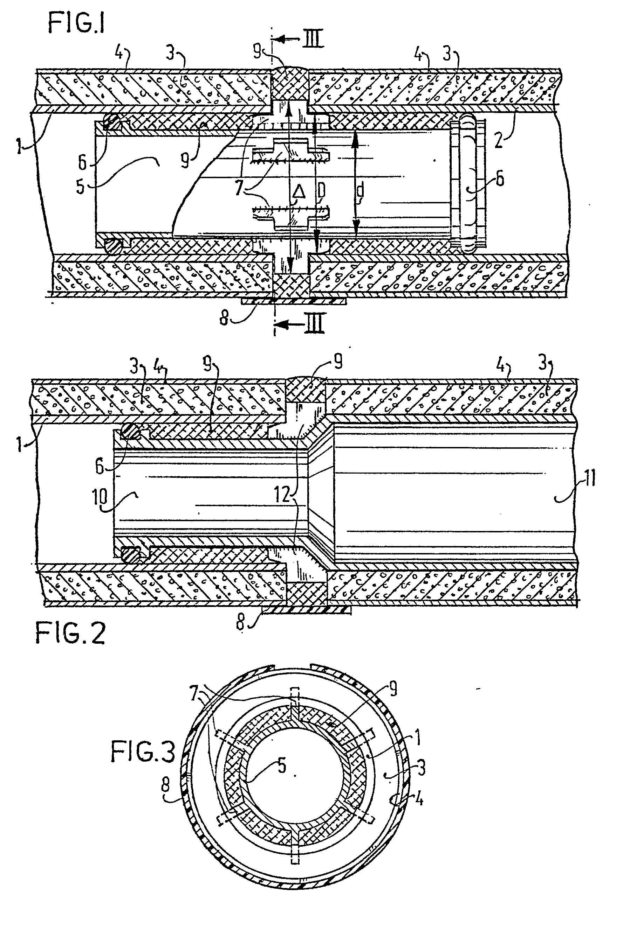

The pipe connection in accordance with the invention as shown in figs. 1 and 3 is made by sawing the two pipe sections 1 and 2 to be connected to the required length, which pipe sections each being provided with a foamy insulating coating 3 and an impervious sheath 4 enclosing said coating.

An uncoated piece of pipe 5 having a smaller outer diameter d than the inner diameter D of the pipe sections 1 and 2 is inserted as a male end into one of said pipe sections. At each extremity said piece of pipe 5 is provided with an elastic sealing ring 6.

The central part of the piece of pipe 5 is provided with a row of spacers 7, the radial extending free ends whereof describing a circle having a diameter $\Delta$ in excess of the inner diameter D of the pipe sections 1 and 2. At points more toward the free ends of the male end the spacers are describing circles just fitting in the pipe sections. In this manner the spacers are centering the male end in the pipe sections 1, 2 and keep some clearance between the pipe sections after slipping the second pipe section over the free extending end of the male end.

Subsequently the seam between both sheaths 4, except for the upper portion thereof, is closed with a strap or a piece of adhesive tape 8 (see in fig. 3), after which the space between the pipe sections 1, 2 and the piece of tube 5 and simultaneously the entire space between the insulating coatings 3 of both pipe sections is filled with a liquid thermosetting synthetic resin 9.

The embodiment shown in fig. 2 is different from that hereinbefore described in that the male end 10 is unitary with one of the pipe sections 11 and the spacers 12 being arranged at the junction between the pipe section 11 and the male end 10. The manner of applying the other pipe section 1 and the synthetic resin 9 is just as described hereinbefore in connection with figs. 1 and 3.

In order to cure the thermosetting synthetic resin also at lower environmental temperatures within an acceptable period of time providing the piece of pipe 5 or the male end 10 with at least one winding of resistance wire, the ends of which being guided through between the pipe sections to the outside is advisable. After casting the synthetic resin a suitable electric power source is connected with these ends thereby heating the resistance wire and thereby the synthetic resin and accordingly shortening the setting time.

**Claims**

1. A pipe connection comprising two externally coated pipe sections (1, 2; 1, 11) and an uncoated piece of pipe (5, 10) having smaller outer diameter (d) than the inner diameter (D) of the pipe sections (1, 2, 11), which piece of pipe is connected with one of the pipe sections (2, 11) and inserted as a male end into the other of the pipe sections (1), the space between the male end (5, 10) and the inner surface of the other of the pipe sections (1) and the space between the adjacent faces of the coated pipe sections (1, 2; 1, 11) being entirely filled with a thermosetting synthetic resin (9), characterized in that the external coating (3, 4) is of the thermal insulating type, and that the male end (5, 10) has a row of spacers (7, 12) being distributed over the periphery thereof and arranged at the junction between the male end (5, 10) and the one of the pipe sections (2, 11), the radial extremities of said spacers describing a first circle having a diameter (Δ) in excess of the inner diameter (D) of the pipe sections (1, 2, 11), said spacers (7, 12) thereby serving to maintain axial separation between the ends of the tube sections, and said spacers further having at a point more towards the free end of the male end portions (5, 10) which lie on a second circle just fitting within the other of the pipe sections (1).

2. The pipe connection according to claim 1 or 2, characterized in that the male end (10) is unitary with one of the pipe sections (11).

3. The pipe connection according to any one of the preceding claims, characterized by the or each free end of the male end (5, 10) having a sealing ring (6) fixed to its outer face.

4. The pipe connection according to any one of the preceding claims, characterized in that the male end (5, 10) is provided with at least one winding of resistance wire, the ends of which are guided through between the pipe sections to the outside.

**Revendications**

1. Raccordement de tuyauterie comprenant deux sections ou éléments de tuyauterie recouverts à l'extérieur (1, 2; 1, 11) et un bout de tuyauterie sans revêtement (5, 10) ayant un diamètre extérieur (d) plus petit que le diamètre intérieur (D) des éléments de tuyauterie (1, 2, 11), lequel bout de tuyauterie (5, 10) est raccordé avec l'un des éléments de tuyauteria (2, 11), l'espace compris entre l'extrémité mâle (5, 10) et la surface intérieure de l'autre élément de tuyauterie (1) et l'espace compris entre les faces adjacentes des éléments de tuyauterie pourvus d'un revêtement (1, 2; 1, 11) étant complètement remplis de résine synthétique à prise thermique (9), caractérisé en ce que le revêtement extérieur (3, 4) est du type isolant thermique, et que l'extrémité mâle (5, 10) présente une rangée d'organes d'espacement (7, 12) réparties autour de sa périphérie et placés à la jointure entre l'extrémité mâle (5, 10) et l'un des éléments de tuyauterie (2, 11), les extrémités radiales de ces organes d'espacement décrivant un premier cercle de diamètre (Δ) plus grand que le diamètre intérieur (D) des éléments de tuyauterie (1, 2, 11), ces organes d'espacement (7, 12) servant ainsi à maintenir la séparation axiale entre les extrémités des éléments de tuyauterie, et ces organes d'espacement comportant un point plus situé vers l'extrémité libre de l'extrémité mâle (5, 10) qui se trouve un second cercle s'adaptant étroitement dans l'autre élément de tuyauterie (1).

2. Raccordement de tuyauterie selon la revendication 1, caractérisé en ce que l'extrémité mâle (10) est d'une seule pièce avec l'un des éléments de tuyauterie (11).

3. Raccordement de tuyauterie selon l'une des revendications précédentes, caractérisé en ce que la ou chaque extrémité libre de l'extrémité mâle (5, 10) présente une bague d'étanchéité (6) fixée sur sa face extérieure.

4. Raccordement de tuyauterie selon l'une des revendications précédentes, caractérisé en ce que l'extrémité mâle (5, 10) est munie d'au moins un enroulement de résistance électrique, dont les extrémités sont guidées entre les éléments de tuyauteria vers l'extérieur.

## Patentansprüche

1. Rohrverbindung mit zwei aussen überzogenen Rohrabschnitten (1, 2; 1, 11) und einem nichtüberzogenen Rohrstück (5, 10), welches einen kleineren Aussendurchmesser (d) aufweist, als durch den Innendurchmesser (D) der Rohrabschnitte (1, 2, 11) gegeben ist, und welches mit einem der Rohrabschnitte (2, 11) verbunden und als Einsteckende in den anderen Rohrabschnitt (1) eingesteckt ist, wobei der Zwischenraum zwischen dem Einsteckende (5, 10) und der Innenfläche des anderen Rohrabschnitts (1) sowie der Zwischenraum zwischen den benachbarten Seiten der überzogenen Rohrabschnitte (1, 2; 1, 11) vollständig mit einem durch Wärme aushärtenden Kunstharz (9) ausgefüllt ist, dadurch gekennzeichnet, dass der äussere Überzug (3, 4) vom thermisch isolierenden Typ ist, dass das Einsteckende (5, 10) eine Reihe von Abstandsgliedern (7, 12) aufweist, die über den Umfang des betreffenden Einsteckendes verteilt und an dem Übergang zwischen dem Einsteckende (5, 10) und dem einen der Rohrabschnitte (2, 11) angeordnet sind, das die radialen Enden der Abstandsglieder einen ersten Kreis mit einem Durchmesser (Δ) beschreiben, der grosser ist als der Innendurchmesser (D) der Rohrabschnitte (1, 2, 11), dass die Abstandsglieder (7, 12) dadurch die axiale Trennung zwischen den Enden der Rohrabschnitte aufrechterhalten und dass die Abstandsglieder an einer weiter zu dem freien Ende des Einsteckendes hin liegenden Stelle Bereiche (5, 10) aufweisen, die auf einem zweiten Kreis liegen, welcher gerade in das ander der Rohrabschnitte (1) passt.

2. Rohrverbindung nach Anspruch 1 oder 2, dadurch gekennzeichnet, dass das Einsteckende (10) mit einem der Rohrabschnitte (11) als Einheit ausgebildet ist.

3. Rohrverbindung nach einem der vorhergehenden Ansprüche, dadurch gekennzeichnet, dass das freie Ende oder jedes frei Ende des Einsteckendes (5, 10) einen an seiner Aussenfläche befestigten Dichtungsring (6) aufweist.

4. Rohrverbindung nach einem der vorhergehenden Ansprüche, dadurch gekennzeichet, dass das Einsteckende (5, 10) mit zumindest einer Widerstandsdraht-Windung versehen ist, deren Enden zwischen die Rohrabschnitte zur Aussenseite hindurchgeführt sind.

FIG.I

FIG.2

FIG.3